# EUROPEAN PATENT APPLICATION

(11) **EP 4 832 276 A1**
(43) Date of publication of application: **28.10.2026**
(21) Application number: 23962108.9
(22) Date of filing: 18.12.2023
(51) Int. Cl.: H02G 1/14

(54) **DRAIN WIRE SEPARATION APPARATUS**

(71) Applicant: ShinMaywa Industries, Ltd., Takarazuka-shi, Hyogo 665-8550 (JP)
(72) Inventor: TAKAHASHI Yoshiki, Takarazuka-shi, Hyogo 665-8550 (JP); SHIRAI Hiroaki, Takarazuka-shi, Hyogo 665-8550 (JP); FUJITA Seiichirou, Takarazuka-shi, Hyogo 665-8550 (JP)
(74) Representative: Grünecker Patent- und Rechtsanwälte PartG mbB
(86) International application number: PCT/JP2023/045260
(87) International publication number: WO 2025/134181

(57) **Abstract**

A drain wire separation device **10** is a device for processing a multi-core cable **1** including a drain wire 2, multiple core wires **3,** and a sheath **5** that covers the drain wire **2** and the multiple core wires **3,** with the drain wire **2** and the multiple core wires **3** exposed from an end portion of the sheath **5,** the drain wire separation device **10** including a cable holding member 21 that holds the sheath **5,** a drain wire holding member **41** that holds the drain wire **2,** and a bending device. The bending device includes at least one of: (1) a first driving device **43** that moves the drain wire holding member **41** and the cable holding member **21** relative to each other to bend the drain wire **2;** and (2) a core wire holding member **71** that holds the multiple core wires 3, and a second driving device **73** that moves the core wire holding member **71** and the cable holding member 21 relative to each other to bend the multiple core wires **3.**

## Description

### Technical Field

The present invention relates to a drain wire separation device.

### Background Art

Multi-core cables in which a drain wire and multiple core wires are covered by a sheath have been known in the art. The drain wire and the multiple core wires are processed separately after being exposed by stripping the sheath of the multi-core cable. For example, Patent Literature 1 discloses a core wire separation device including a core wire separation member having a clamp for catching only the multiple core wires without catching the drain wire, and a moving device that moves the clamp in a direction that intersects the axial direction of the multi-core cable. With the core wire separation device described in Patent Literature 1, the multiple core wires are bent by the movement of the clamp while the drain wire is not bent. It is stated that, as a result, the drain wire and the multiple core wires of the multi-core cable can be separated. By separating the drain wire and the multiple core wires, it becomes easier to perform different processes on the drain wire and the multiple core wires. According to Patent Literature 1, prior to being mounted on the core wire separation device, the multi-core cable undergoes the process of stripping the sheath at the tip portion and the process of untwisting the drain wire and multiple core wires twisted together.

### Citation List

### Patent Literature

Patent Literature 1: WO 2022/107628

### Summary of Invention

### Technical Problem

In the process of untwisting the drain wire and the multiple core wires performed before the drain wire and the multiple core wires are separated, there may be cases where the untwisting cannot be done completely, leaving the drain wire and the multiple core wires entangled. When such a multi-core cable is processed using the core wire separation device described in Patent Literature 1, the drain wire, which should normally be left unbent, may be bent by being pulled by the core wires. In such cases, the drain wire and the multiple core wires cannot be separated into the desired state.

The present invention has been made in view of such a problem, and an object thereof is to provide a drain wire separation device capable of more reliably separating the drain wire and the core wires.

### Solution to Problem

A drain wire separation device disclosed herein is a device for processing a multi-core cable including a drain wire, multiple core wires, and a sheath that covers the drain wire and the multiple core wires, with the drain wire and the multiple core wires being exposed from an end portion of the sheath, the drain wire separation device including: a cable holding member that holds the sheath; a drain wire holding member that holds the drain wire; and a bending device. The bending device includes at least one of: (1) a first driving device that moves the drain wire holding member and the cable holding member relative to each other to bend the drain wire; and (2) a core wire holding member that holds the multiple core wires, and a second driving device that moves the core wire holding member and the cable holding member relative to each other to bend the multiple core wires.

With the drain wire separation device described above, the drain wire and the multiple core wires can be separated from each other by at least one of: using the first driving device to move the drain wire holding member and the cable holding member relative to each other to bend the drain wire; and using the second driving device to move the core wire holding member and the cable holding member relative to each other to bend the multiple core wires. In this process, since the drain wire is held by the drain wire holding member, the drain wire can be separated from the multiple core wires even if the drain wire and the core wires are entangled.

In one preferred embodiment of the drain wire separation device, the bending device includes the first driving device. With the drain wire separation device described above, the drain wire and the multiple core wires can be separated from each other by bending at least the drain wire. By holding and bending the drain wire to move the drain wire away from the core wires, it is possible to prevent the posture of the drain wire from being disturbed while processing the core wires.

In one preferred embodiment of the drain wire separation device, the bending device includes the core wire holding member and the second driving device. With the drain wire separation device described above, the drain wire and the multiple core wires can be separated from each other by bending at least the core wires. Since not only the drain wire but also the multiple core wires are held, it is possible to stabilize also the posture of the multiple core wires.

In one preferred embodiment, the drain wire separation device further includes: a moving device that moves the drain wire holding member from a standby position away from the drain wire to a position at which the drain wire holding member is capable of holding the drain wire; and a restricting member that restricts movement of the drain wire in an approach direction of the drain wire holding member.

With the drain wire separation device described above, even if the drain wire and the core wires are entangled and the core wires are pushed in the approach direction by the drain wire holding member or by a member that moves together with the drain wire holding member, the position of the drain wire remains unmoved due to the restriction by the restricting member. Therefore, it is easy to hold the drain wire by the drain wire holding member.

The drain wire separation device may include a moving device that moves the cable holding member from one position at which the drain wire and the drain wire holding member are away from each other to another position at which the drain wire holding member is capable of holding the drain wire. The drain wire separation device may further include a restricting member configured to be moved by the moving device together with the cable holding member and to restrict movement of the drain wire in a direction opposite to a moving direction of the cable holding member. In this embodiment, at least the cable holding member, from among the cable holding member and the drain wire holding member, is moved. According to this embodiment, it is possible to realize similar functions/effects to those of the drain wire separation device described above.

In one preferred embodiment of these drain wire separation devices, the restricting member includes a clamp that grips the drain wire and the multiple core wires.

With the drain wire separation device described above, it is possible to reliably restrict the movement of the drain wire by gripping the drain wire and the multiple core wires.

In one preferred embodiment, the drain wire separation device further includes a positioning device configured to move at least one of the multi-core cable and the drain wire holding member and to align a position of the drain wire with a position of the drain wire holding member in a circumferential direction of the multi-core cable.

With the drain wire separation device described above, the drain wire can be held by the drain wire holding member regardless of the position in the circumferential direction of the drain wire after being untwisted.

In one preferred embodiment of the drain wire separation device, the drain wire holding member includes a pair of claw members. The drain wire separation device further includes an actuator that moves the pair of claw members closer to or away from each other. The pair of claw members each have a sharp-angled tip portion capable of being inserted between the drain wire and the multiple core wires.

With the drain wire separation device described above, by forming the tip portions of the pair of claw members into sharp angles, it becomes possible to insert the tip portions between the drain wire and the multiple core wires, and it is possible to hold the drain wire with the inserted tip portions.

In one preferred embodiment of the drain wire separation device, the drain wire holding member includes a pair of claw members. The drain wire separation device further includes: an actuator that moves the pair of claw members closer to or away from each other; a guide member provided with a guide passage having a width sufficient to allow the drain wire to pass through; and a moving device that moves the drain wire holding member and the guide member closer to the cable holding member. The guide passage extends so as to pass between the pair of claw members in an approach direction of the pair of claw members. The moving device moves the drain wire through the guide passage to reach between the pair of claw members.

With the drain wire separation device described above, the drain wire can be guided between the pair of claw members by passing the drain wire through the guide passage.

In one preferred embodiment, the drain wire separation device further includes a discharge device that pushes the drain wire to discharge the drain wire from the guide passage.

With the drain wire separation device described above, even when the drain wire is caught in the guide passage, the drain wire can be discharged from the guide passage by pushing the drain wire by the discharge device.

### Advantageous Effects of Invention

With the drain wire separation device disclosed herein, it is possible to more reliably separate the drain wire and the core wires.

### Brief Description of Drawings

[Fig. 1] A schematic cross-sectional view of a multi-core cable.
[Fig. 2] A perspective view of a drain wire separation device according to one embodiment.
[Fig. 3] A rear view of the drain wire holding member.
[Fig. 4] A perspective view of the drain wire separation device with the drain wire discharge device driven.
[Fig. 5] A rear view of the wire clamp.
[Fig. 6] A block diagram of the drain wire separation device.
[Fig. 7] A flowchart showing an example of the process of separating a drain wire and multiple core wires.
[Fig. 8] A perspective view of the drain wire separation device in a state where the drain wire holding device has been raised to bend the drain wire.
[Fig. 9] A perspective view of the drain wire separation device in a state where the core wire clamp has been lowered to bend the core wires.

### Description of Embodiments

### [Configuration of drain wire separation device]

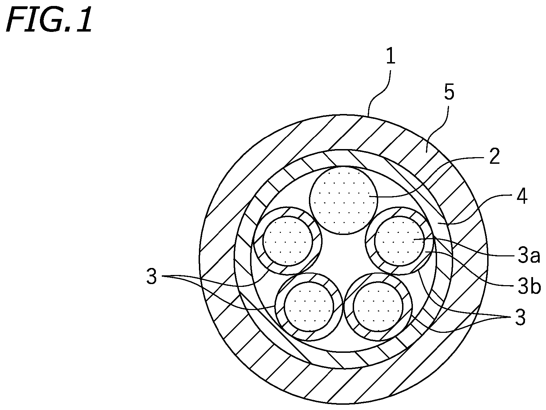

An embodiment of the present invention will now be described with reference to the drawings. First, a multi-core cable 1, which is the subject of wire processing here, will be described with reference to Fig. **1.** Fig. 1 is a schematic cross-sectional view of the multi-core cable **1** according to one example. As shown in Fig. 1, the multi-core cable **1** includes a drain wire **2,** multiple core wires **3,** a shield **4,** and a sheath **5.** The multiple core wires 3 each include a core **3a** and an insulating cover **3b** that covers the core **3a.** The shield **4** is a conductor that shields the core wires **3** from external noise. The shield **4** covers the outside of the multiple core wires **3.** The drain wire **2** is electrically connected to the shield **4.** The drain wire **2** is grounded, thereby grounding the shield **4.** The drain wire **2** consists of multiple fine conductor strands, and is not covered by an insulator. The sheath **5** covers the drain wire **2,** the multiple core wires **3,** and the shield 4. The sheath **5** is made of an insulator. Although not shown in the figures, the multiple core wires **3** and the drain wire **2** are twisted together inside the shield 4. Note that there is no particular limitation on the number of core wires **3.**

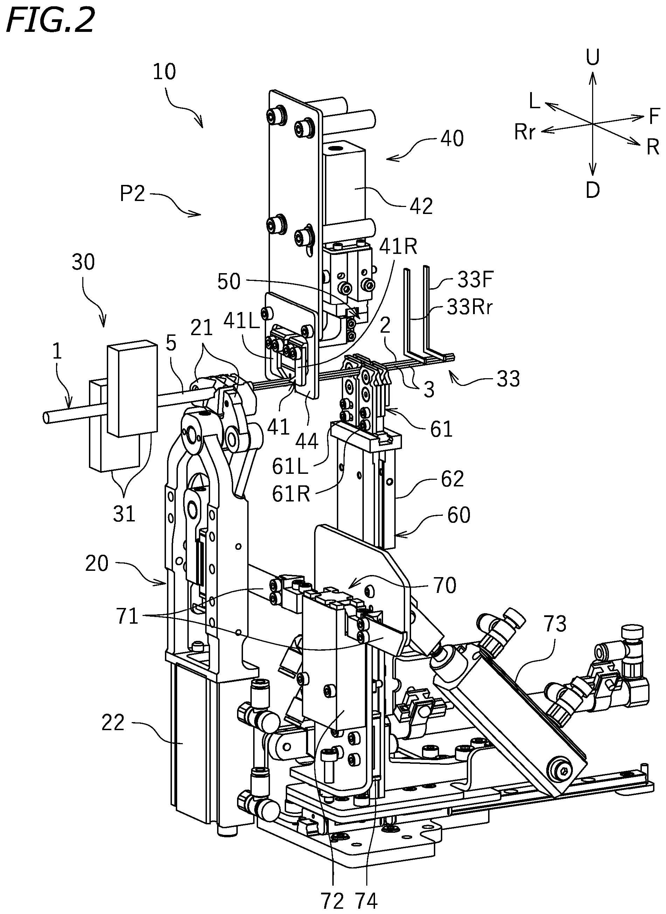

Before being mounted on a drain wire separation device **10** (see Fig. **2****)** according to the present embodiment, the multi-core cable **1** is subjected to a process of stripping the sheath **5** at a tip portion. When mounted on the drain wire separation device 10, the drain wire **2** and the multiple core wires **3** are exposed from the end portion of the sheath **5.** After the process of stripping the sheath **5** at the tip portion and before being mounted on the drain wire separation device **10,** the multi-core cable **1** is also subjected to a process of untwisting the multiple core wires **3** and the drain wire **2** twisted together. When mounted on the drain wire separation device **10,** the drain wire **2** and the multiple core wires **3** are ideally in a state of having been straightened and not entangled with one another. Note however that, in practice, the untwisting may not be done completely, leaving the drain wire **2** and one or more core wires **3** slightly entangled. Hereinafter, unless otherwise specified, the exposed portion of the drain wire **2** exposed from the sheath **5** will simply be referred to as the drain wire **2,** and the exposed portions of the multiple core wires **3** exposed from the sheath **5** will simply be referred to as the core wires **3.**

Fig. **2** is a perspective view of the drain wire separation device **10** according to one embodiment. In the following description, the right side of the drawing sheet of Fig. **2** is defined as the front side of the drain wire separation device **10.** The left side, the right side, the upper side, and the lower side of the drain wire separation device **10** as viewed toward the front side are defined as left, right, up, and down, respectively. The front-rear direction, the left-right direction, and the up-down direction are orthogonal to one another. In the subsequent figures, F, Rr, L, R, U, and D represent front, rear, left, right, up, and down, respectively. Note however that these directions in the following description are merely defined for the purpose of discussion, and do not in any way limit the present invention.

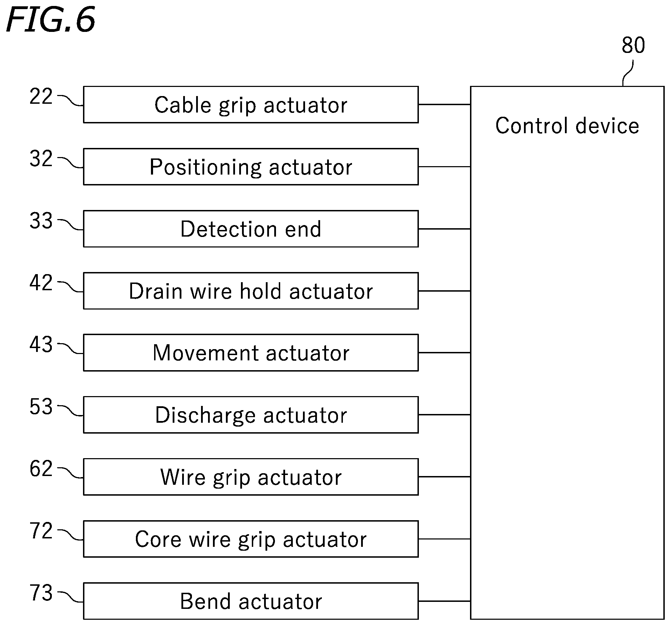

As shown in Fig. **2****,** the drain wire separation device **10** includes a cable holding device **20,** a positioning device **30,** a drain wire bending device **40,** a drain wire discharge device **50,** a wire holding device **60,** a core wire bending device **70,** and a control device **80** (see Fig. **6****).**

The cable holding device **20** holds the sheath **5** of the multi-core cable 1. As shown in Fig. **2****,** the cable holding device **20** includes a pair of cable clamps **21** that can be opened and closed, and a cable grip actuator **22** that opens and closes the cable clamps **21.** By driving the cable grip actuator **22** to close the pair of cable clamps **21,** the cable holding device **20** grips the sheath **5.** The cable grip actuator **22** is an air cylinder, for example. Note however that the cable grip actuator **22** is not limited to an air cylinder. Here, the cable holding device **20** holds the multi-core cable 1 so that the axial direction of the multi-core cable 1 aligns with the front-rear direction. More specifically, the cable holding device **20** holds the multi-core cable 1 so that the end portion where the drain wire **2** and the multiple core wires 3 are exposed faces forward. With the multi-core cable **1** held by the cable holding device **20,** the exposed portions of the drain wire **2** and the multiple core wires **3** are held in the air in a location forward relative to the cable holding device **20,** and extend substantially in the front-rear direction.

The positioning device **30** is configured to move at least one of the multi-core cable 1 and a drain wire holding member **41** (to be described later) of the drain wire bending device **40,** thereby aligning the position of the drain wire 2 in the circumferential direction of the multi-core cable **1** with the position of the drain wire holding member **41.** Here, the positioning device **30** rotates the multi-core cable 1 about the axis to move the drain wire **2** to the 12 o'clock position. The drain wire holding member **41** is arranged upward of the axis of the multi-core cable **1.** By positioning the drain wire **2** at the 12 o'clock position, the position of the drain wire 2 and the position of the drain wire holding member **41** in the circumferential direction of the multi-core cable 1 are aligned. Note however that the positioning device 30 may be configured to rotate the drain wire holding member **41** about the axis of the multi-core cable 1.

As shown in Fig. **2****,** the positioning device 30 includes a pair of clamping plates **31,** a positioning actuator **32** (see Fig. **6****)** for moving the pair of clamping plates **31** so as to be shifted from each other in the up-down direction, and a detection end **33.** The pair of clamping plates **31** is arranged rearward relative to the cable holding device 20. Here, the pair of clamping plates **31** are provided leftward and rightward of the multi-core cable **1,** respectively. The pair of clamping plates **31** each extend in the front-rear direction and the up-and-down direction. The pair of clamping plates **31** clamp the sheath **5** of the multi-core cable 1 from left and right. With the multi-core cable **1** clamped between the pair of clamping plates **31,** the positioning actuator **32** is driven to move one clamping plate **31** upward and the other clamping plate **31** downward, thereby causing the multi-core cable 1 to rotate about the axis.

The detection end **33** is configured to detect the drain wire **2** being at the 12 o'clock position. The detection end **33** includes a pair of electrodes **33F** and **33Rr** arranged upward and in the 12 o'clock direction of the drain wire **2** and the multiple core wires **3.** The electrode **33Rr** is arranged rearward relative to the electrode **33F.** As the drain wire **2** is moved in the 12 o'clock direction by rotating the multi-core cable 1, the drain wire **2** contacts the pair of electrodes **33F** and **33Rr.** A voltage is applied between the pair of electrodes **33F** and **33Rr.** When the drain wire **2** contacts the pair of electrodes **33F** and **33Rr,** the pair of electrodes **33F** and **33Rr** become electrically conductive via the drain wire **2,** which is an uncovered conductor. As a result, the detection end **33** detects the drain wire **2** being at the **12** o'clock position. When it is detected that the drain wire **2** is at the **12** o'clock position, the positioning device **30** stops rotating the multi-core cable **1.**

The configuration of the positioning device **30** is not limited to that described above. The pair of clamping plates 31 of the positioning device **30** may extend in directions other than the up-down direction (e.g., the left-right direction) and may move so as to be shifted from each other in that direction (e.g., the left-right direction). The positioning device **30** may rotate the multi-core cable 1 by driving a rotary actuator or a motor, for example. The mechanism for detecting the drain wire **2** being at the 12 o'clock position may be configured, for example, to include an imaging device to identify the drain wire **2** from the captured image. The position in the circumferential direction of the drain wire **2** after the positioning process is not limited to the 12 o'clock position.

The drain wire bending device **40** is configured to hold the drain wire **2** and bend the drain wire **2** upward. The drain wire bending device **40** is provided upward of the exposed drain wire **2** and multiple core wires **3.** The drain wire bending device **40** is arranged forward and upward relative to the cable holding device **20.** As shown in Fig. **2****,** the drain wire bending device **40** includes the drain wire holding member **41,** a drain wire hold actuator **42,** a movement actuator **43** (see Fig. **6****),** and a guide plate **44.**

The drain wire holding member **41** is a member that holds the drain wire **2.** Here, the drain wire holding member **41** includes a pair of holding claws **41L** and **41R.** The pair of holding claws **41L** and **41R** are provided leftward and rightward of the multi-core cable 1, respectively. The drain wire hold actuator **42** moves the pair of holding claws **41L** and **41R** closer to or away from each other. Here, in order to hold the drain wire **2,** the drain wire hold actuator **42** moves the left holding claw **41L** rightward and the right holding claw **41R** leftward. As a result, the pair of holding claws **41L** and **41R** move closer to each other. In order to release the drain wire **2,** the drain wire hold actuator **42** moves the left holding claw **41L** leftward and the right holding claw **41R** rightward. As a result, the pair of holding claws **41L** and **41R** move away from each other.

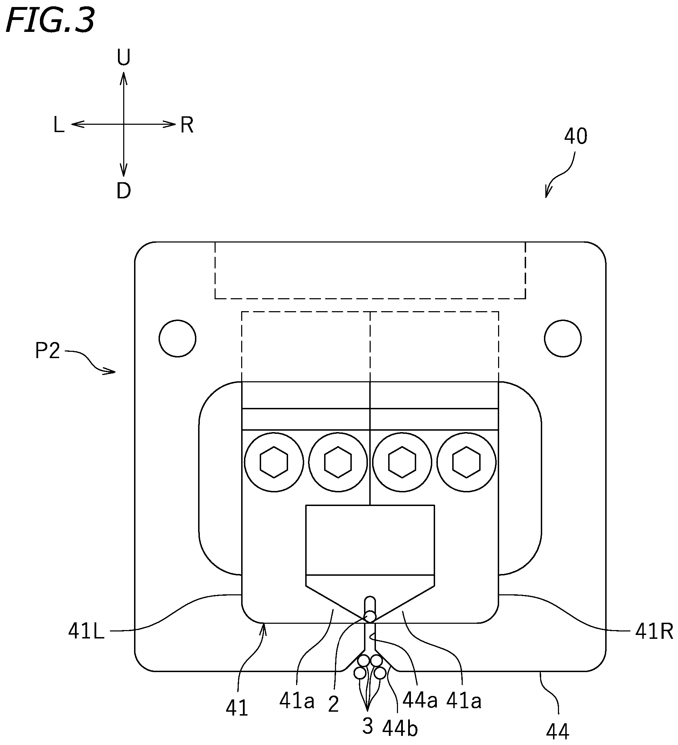

Fig. 3 is a rear view of the drain wire holding member **41.** Note however that some members are not shown in Fig. 3. As shown in Fig. **3****,** the pair of holding claws **41L** and **41R** each have a sharp-angled tip portion **41a** capable of being inserted between the drain wire **2** and the multiple core wires 3. As shown in Fig. 3, when the pair of holding claws **41L** and **41R** are closed, the tip portions **41a** are both inserted between the drain wire **2** and the multiple core wires 3. When the tip portions **41a** both move to the innermost position of their range of movement, the tip portions **41a** contact each other. The drain wire 2 is embraced from below and held by both of the tip portions **41a** that are in contact with each other. Note however that the pair of holding claws **41L** and **41R** may be configured to grip the drain wire **2,** for example.

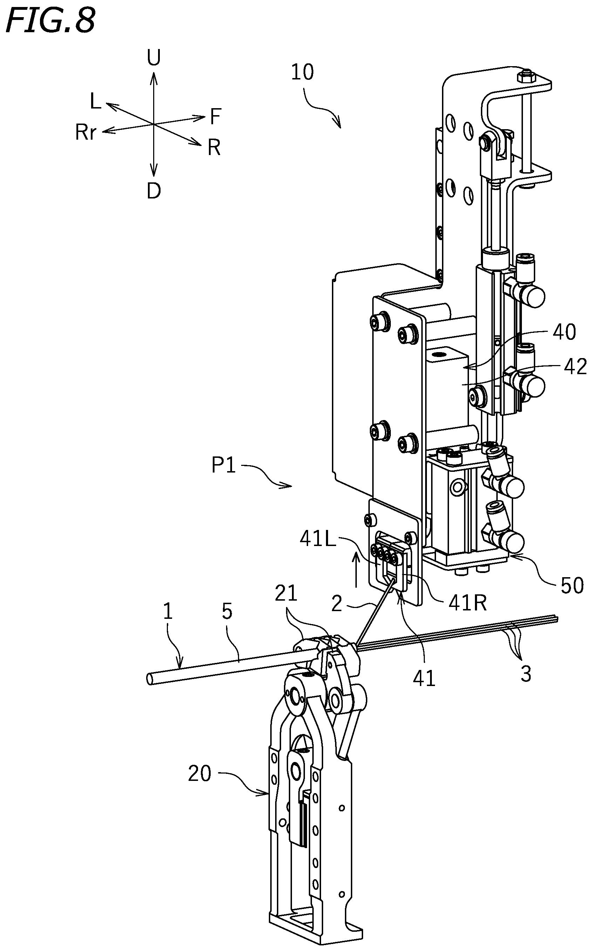

The movement actuator **43** moves the drain wire holding member **41** in the up-down direction. The movement actuator **43** moves the drain wire holding member **41** from the standby position **P1** (see Fig. **8****),** at which the drain wire holding member **41** is away from the drain wire **2,** to the holding position **P2** (the position shown in Fig. **2** and Fig. **3****),** at which the drain wire holding member **41** is capable of holding the drain wire **2.** The standby position **P1** is set upward relative to the holding position **P2.** The movement actuator **43** moves the drain wire holding member **41,** holding the drain wire **2,** from the holding position **P2** to the standby position **P1,** thereby bending the drain wire **2** upward. The movement actuator **43** is an example of the first driving device that bends the drain wire **2** by moving the drain wire holding member **41** away from the cable clamps **21,** and an example of the moving device that moves the drain wire holding member **41** from the standby position **P1** to the holding position **P2.**

The guide plate **44** is a member that guides the drain wire **2** into between the pair of holding claws **41L, 41R.** The guide plate **44** is configured to move together with the pair of holding claws **41L, 41R** when the movement actuator **43** is driven. The guide plate **44** extends in the left-right direction and in the up-down direction. The guide plate **44** extends to a location downward relative to the pair of holding claws **41L, 41R.** As shown in Fig. 3, the guide plate **44** is provided with a guide passage **44a** having a width sufficient to allow the drain wire **2** to pass through. In the approach direction of the pair of holding claws **41L, 41R** (here, the left-right direction), the guide passage **44a** extends so as to pass between the pair of holding claws **41L, 41R.** Here, the guide passage **44a** is an elongated hole that is cut out to the lower end of the guide plate 44 and extends upward therefrom. The width of the guide passage **44a** in the left-right direction is slightly larger than the diameter of the drain wire **2.**

The width of the guide passage **44a** is set to a width such that the multiple core wires **3** do not pass therethrough. A bevel **44b** is provided at the lower end portion of the guide passage **44a** to guide the drain wire **2** into the guide passage **44a.** The guide passage **44a** extends to a location upward relative to the tip portions **41a** of the pair of holding claws **41L, 41R.** The movement actuator **43** moves the drain wire holding member **41** and the guide plate **44** closer to the cable clamps **21.** The movement actuator **43** moves the drain wire **2** through the guide passage **44a** to reach between the pair of holding claws **41L, 41R.**

The guide member that guides the drain wire **2** into between the pair of holding claws **41L, 41R** is not limited to a flat plate-shaped member such as the guide plate **44.** The guide member that guides the drain wire **2** into between the pair of holding claws **41L, 41R** may be a pair of wall members arranged in the left-right direction such that the guide passage **44a** is formed therebetween, for example.

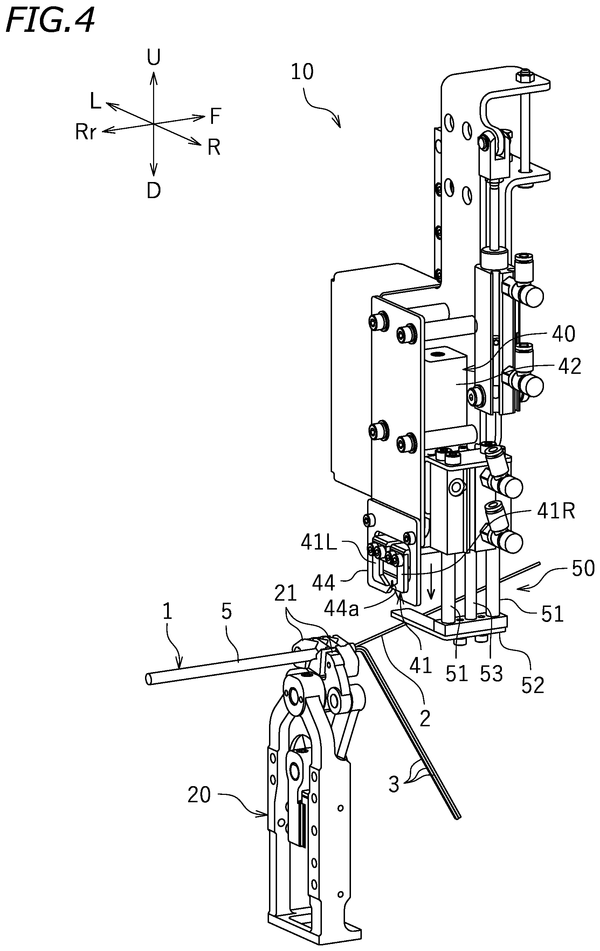

The drain wire discharge device **50** is a device that pushes the drain wire **2** to discharge the drain wire **2** from the guide passage **44a.** The drain wire discharge device **50** is provided because the drain wire **2** may get caught in the guide passage **44a** and fail to come off the drain wire bending device **40** even after the pair of holding claws **41L, 41R** are opened. Fig. **4** is a perspective view of the drain wire separation device 10 with the drain wire discharge device **50** driven. Some members are also omitted in Fig. 4. As shown in Fig. **4****,** the drain wire discharge device 50 includes multiple guide shafts 51, a push plate **52,** and a discharge actuator **53.** The push plate **52** is arranged rearward relative to the drain wire holding member **41.** The push plate **52** extends in the front-rear direction and in the left-right direction. The multiple guide shafts **51** are connected to the upper surface of the push plate **52.** The multiple guide shafts **51** are inserted through bushes (not shown). The guide shafts **51** are movable in the up-down direction along the bushes. The push plate **52** moves in the up-down direction together with the multiple guide shafts **51.** The discharge actuator **53** is connected to the upper surface of the push plate **52.** The discharge actuator **53** is an air cylinder, for example.

As shown in Fig. **4****,** when the discharge actuator **53** is driven to move the push plate **52** downward, the push plate **52** pushes the drain wire **2,** which is inserted into the guide passage **44a,** downward. As a result, the drain wire **2** comes out of the guide passage **44a** and is discharged from the drain wire bending device **40.**

The wire holding device **60** is a device that holds the drain wire **2** and the multiple core wires **3** so that the drain wire **2** does not move in the approach direction of the drain wire holding member **41** (here, downward). With the drain wire **2** entangled with the core wires **3,** if the multiple core wires 3 move downward by being pushed by the drain wire holding member **41** or the guide plate **44,** the drain wire **2** also moves downward together. Then, it is difficult to hold the drain wire **2** with the drain wire holding member **41.** The wire holding device **60** prevents the drain wire **2** from moving downward by being pulled by the multiple core wires **3.**

As shown in Fig. **2****,** the wire holding device **60** includes a restricting member **61** that restricts the movement of the drain wire **2** in the approach direction of the drain wire holding member **41** (here, downward). In the present embodiment, the restricting member **61** includes a pair of wire clamps **61L** and **61R** that grip the drain wire **2** and the multiple core wires **3.** Here, the restricting member **61** restricts the movement of the drain wire **2** in the approach direction of the drain wire holding member **41** by gripping the drain wire **2** and the multiple core wires **3.** The wire holding device **60** further includes a wire grip actuator **62** that drives the pair of wire clamps **61L, 61R.**

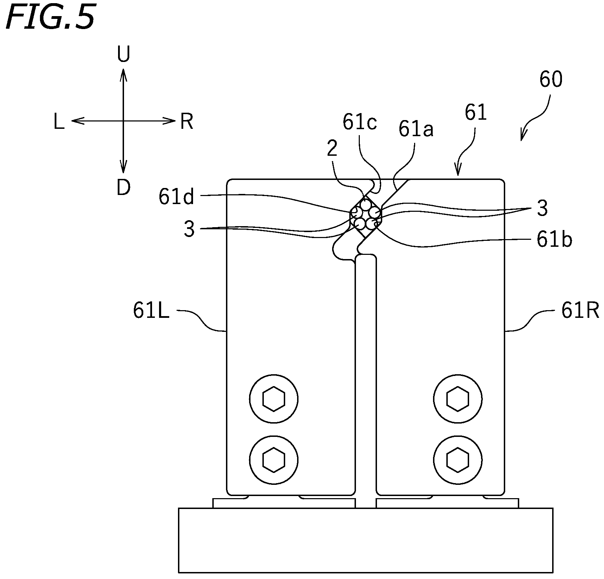

Fig. **5** is a rear view of the wire clamps **61L, 61R.** Some members are not shown also in Fig. **5****.** As shown in Fig. **5****,** the pair of wire clamps **61L** and **61R** are provided leftward and rightward of the multi-core cable **1,** respectively. The wire grip actuator **62** moves the pair of wire clamps **61L** and **61R** closer to or away from each other. Here, in order to grip the drain wire **2** and the multiple core wires **3,** the wire grip actuator **62** moves the left wire clamp **61L** rightward and the right wire clamp **61R** leftward. As a result, the pair of wire clamps **61L** and **61R** move closer to each other. In order to release the drain wire **2** and the multiple core wires **3,** the wire grip actuator **62** moves the left wire clamp **61L** leftward and the right wire clamp **61R** rightward. As a result, the pair of wire clamps **61L** and **61R** move away from each other.

As shown in Fig. **5****,** a sloped surface **61a,** which is sloping down toward the inner side (the left side) in the left-right direction, is formed at the upper left corner of the right wire clamp **61R.** A recessed portion **61b** that accommodates the drain wire **2** and the multiple core wires **3** while being gripped is provided along the sloped surface **61a.** A sloped surface **61c,** which is sloping upward toward the inner side (the right side) in the left-right direction, is formed at the upper right corner of the left wire clamp **61L.** The sloped surface **61c** is formed substantially parallel to the sloped surface **61a.** A recessed portion **61d** that is arranged opposing the recessed portion **61b** is provided along the sloped surface **61c.** When the pair of wire clamps **61L** and **61R** are closed with the drain wire **2** and the multiple core wires 3 positioned between the sloped surfaces **61a** and **61c,** the drain wire **2** and the multiple core wires **3** are guided into between the recessed portions **61b** and **61d** along the slopes of the sloped surfaces **61a** and **61c.** The pair of wire clamps **61L** and **61R** grip the drain wire **2** and the multiple core wires 3 in the recessed portions **61b** and **61d.**

As shown in Fig. **2****,** the pair of wire clamps **61L, 61R** are arranged at a position in the front-rear direction different from that of the drain wire holding member **41.** Here, the pair of wire clamps **61L, 61R** are arranged forward relative to the drain wire holding member 41. Thus, the drain wire holding member 41 is located between the cable clamp **21** and the wire clamps **61L, 61R** in the axial direction of the multi-core cable 1 (here, the front-rear direction). By supporting the opposite ends with the cable clamp **21** and the wire clamps **61L, 61R,** it is possible to more reliably restrict the downward movement of the drain wire **2.**

The core wire bending device **70** is a device that bends the multiple core wires 3 downward. As shown in Fig. **2****,** the core wire bending device **70** is arranged forward relative to the cable holding device **20** and rearward relative to the wire holding device **60.** The core wire bending device **70** is arranged forward relative to the drain wire bending device **40.** Note however that the core wire bending device 70 may be arranged rearward relative to the drain wire bending device **40.**

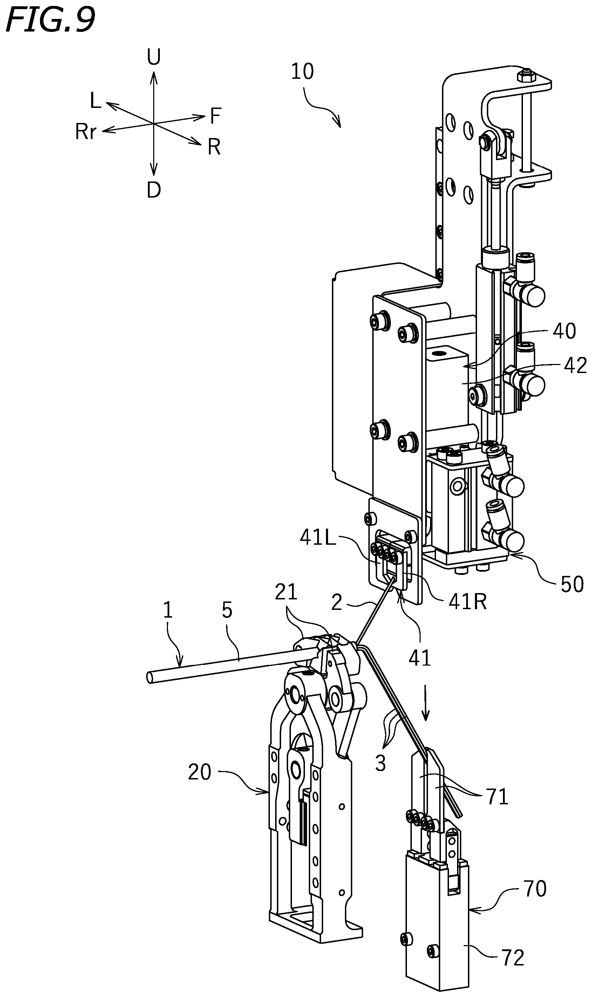

As shown in Fig. **2****,** the core wire bending device **70** includes a pair of core wire clamps **71,** a core wire grip actuator **72,** a bend actuator **73,** and a slide guide **74.** The pair of core wire clamps **71** hold the multiple core wires **3.** The core wire grip actuator **72** moves the pair of core wire clamps **71** closer to each other, and causes the core wire clamps **71** to grip the multiple core wires **3.** In order to release the multiple core wires **3,** the core wire grip actuator **72** moves the pair of core wire clamps **71** away from each other. Here, the core wire grip actuator **72** moves the pair of core wire clamps **71** closer to or away from each other by rotating the pair of core wire clamps **71** about their respective lower ends (see also Fig. **9****).**

The bend actuator **73** moves the pair of core wire clamps **71** in the up-down direction. The bend actuator **73** is an example of the second driving device that bends the multiple core wires **3** by moving the core wire clamp **71** and the cable clamp **21** away from each other. As the bend actuator **73** is driven, with the multiple core wires **3** gripped by the core wire clamp **71,** to move the core wire clamp **71** downward, the multiple core wires **3** are bent downward. The pair of core wire clamps **71** are slidably engaged with the slide guide **74** extending in the up-down direction.

The control device **80** controls the operations of different sections of the drain wire separation device **10.** Fig. **6** is a block diagram of the drain wire separation device **10.** As shown in Fig. **6****,** the control device **80** is connected to the cable grip actuator **22** of the cable holding device **20,** the positioning actuator 32 and the detection end **33** of the positioning device **30,** the drain wire hold actuator **42** and the movement actuator **43** of the drain wire bending device **40,** the discharge actuator **53** of the drain wire discharge device **50,** the wire grip actuator **62** of the wire holding device **60,** and the core wire grip actuator **72** and the bend actuator **73** of the core wire bending device **70,** and controls the operations thereof.

There is no particular limitation on the configuration of the control device **80.** The control device **80** may include, for example, a central processing unit (hereinafter referred to as a CPU), a ROM storing programs to be executed by the CPU, a RAM, etc. Each section of the control device **80** may be implemented by software, or may be implemented by hardware. Also, each section may be a processor, or may be a circuit. The control device **80** may be a programmable controller, a computer, or the like, for example. How the operations of different sections are controlled by the control device **80** will be discussed in the following description of the process of separating the drain wire **2** and the core wires **3.**

### [Process of separating drain wire and core wires]

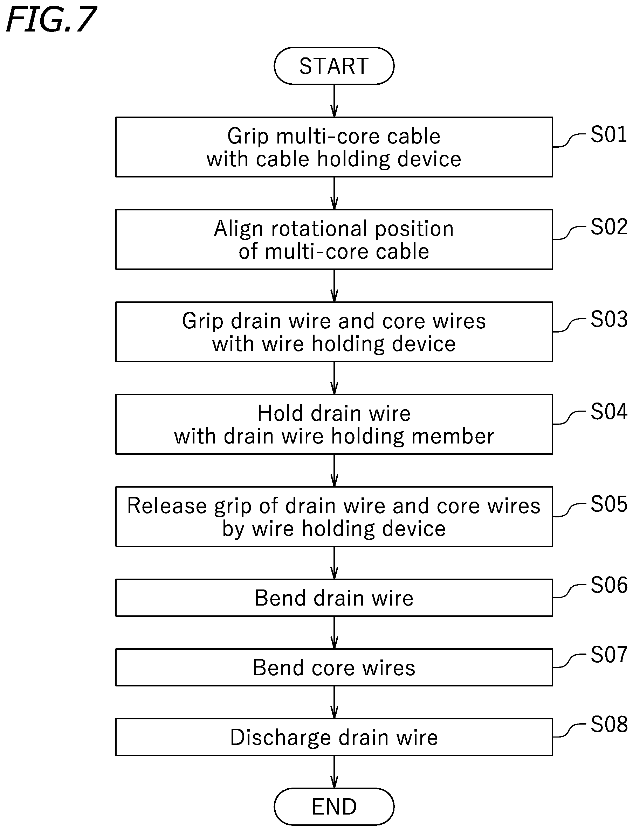

The process of separating the drain wire **2** and the core wires **3** will now be described. Fig. **7** is a flowchart showing an example of the process of separating the drain wire **2** and the multiple core wires **3.** As shown in Fig. **7****,** in the process of separating the drain wire **2** and the multiple core wires 3 according to one example, in step S01, the multi-core cable **1** is gripped by the cable holding device **20.** In the description here, it is assumed that the sheath **5** of the multi-core cable **1** has already been stripped and the drain wire **2** and the multiple core wires **3** untwisted. Note however that the operation of stripping the sheath **5** and untwisting the wires may be performed on the multi-core cable **1** gripped by the cable holding device **20.**

In step S02, the multi-core cable **1** is rotated about the axis so that the drain wire **2** is moved to the 12 o'clock position. As a result, the drain wire **2** faces the drain wire holding member **41.**

In step S03, the drain wire **2** and the multiple core wires **3** are gripped by the wire holding device **60.**

In step S04, the drain wire **2** is held by the drain wire holding member **41.** In step S04, the drain wire holding member **41** and the guide plate **44** are moved downward. The drain wire holding member **41** is moved from the standby position P1 to the holding position **P2.** The drain wire **2** is guided through the guide passage **44a** of the guide plate **44** into between the left holding claw **41L** and the right holding claw **41R.** Since the drain wire **2** and the multiple core wires **3** are gripped by the wire holding device **60,** the drain wire **2** remains in the initial position. The multiple core wires **3** are pressed by the guide plate **44** and are slightly bent downward. Even if the drain wire **2** and the core wires **3** are entangled, such entanglement is resolved in step S04. In step S04, the holding claws **41L** and **41R** are then closed. As a result, the tip portion **41a** of the holding claw **41L** and the tip portion **41a** of the holding claw **41R** come into contact downward of the drain wire **2,** thereby holding the drain wire **2.**

In step S05, the grip on the drain wire **2** and the multiple core wires **3** by the wire holding device **60** is released.

In step S06, the drain wire holding member **41** is moved upward, and the drain wire **2** is bent upward. Fig. **8** is a perspective view of the drain wire separation device **10** in a state where the drain wire holding member **41** has been raised to bend the drain wire **2.** Some members are not shown in Fig. **8****.** As shown in Fig. **8****,** in step S06, the drain wire holding member **41** moves to the standby position **P1.** As a result, the drain wire **2** is bent to a position at which the drain wire 2 is not gripped by the core wire bending device **70** (see Fig. **2****).**

In step S07, the multiple core wires **3** are bent downward. In step S07, the core wire clamp 71 is first raised. Next, the core wire clamp **71** is closed. As a result, the multiple core wires 3 are gripped by the core wire clamp **71.** Since the drain wire **2** has already been bent upward, the drain wire **2** is not gripped by the core wire clamp **71** at this time. Further, in step **S07,** the core wire clamp **71** is lowered. Fig. **9** is a perspective view of the drain wire separation device **10** in a state where the core wire clamp **71** has been lowered to bend the core wires **3.** Some members are not shown also in Fig. **9****.** As shown in Fig. 9, by lowering the core wire clamp **71** while gripping the multiple core wires 3, the multiple core wires 3 are bent downward.

In step S08, the drain wire discharge device **50** is driven to discharge the drain wire **2** from the drain wire bending device **40.** In step S08, as shown in Fig. **4****,** the push plate **52** is lowered, and the push plate **52** pushes the drain wire **2** downward. As a result, the drain wire **2** is released from the guide passage **44a.** Upon completion of step S08, the separation of the drain wire **2** and the multiple core wires 3 is completed. Note that step S08 may be performed before step S07.

### [Functions/effects of embodiment]

The functions/effects that can be achieved by the drain wire separation device 10 according to the present embodiment will now be described.

The drain wire separation device **10** according to the present embodiment is a device for processing the multi-core cable 1 including the drain wire **2,** the multiple core wires **3,** and the sheath **5** that covers the drain wire **2** and the multiple core wires **3,** with the drain wire **2** and the multiple core wires **3** being exposed from an end portion of the sheath **5,** the device including the cable clamp 21 that holds the sheath 5, the drain wire holding member **41** that holds the drain wire 2, and the bending device. In the present embodiment, the bending device includes the movement actuator **43** that moves the drain wire holding member **41** and the cable clamp **21** away from each other to bend the drain wire **2.** In the present embodiment, the bending device further includes the core wire clamp **71** that holds the multiple core wires **3,** and the bend actuator **73** that moves the core wire clamp 71 and the cable clamp **21** away from each other to bend the multiple core wires **3.**

With such a drain wire separation device **10,** it is possible to separate the drain wire **2** and the multiple core wires **3** by using the movement actuator **43** to move the drain wire holding member **41** and the cable clamp **21** away from each other to bend the drain wire **2,** and using the bend actuator **73** to move the core wire clamp 71 and the cable clamp **21** away from each other to bend the multiple core wires **3.** In this process, since the drain wire **2** is held by the drain wire holding member **41,** the drain wire **2** can be separated from the multiple core wires **3** even if the drain wire **2** and the core wires **3** are entangled.

Before separating the drain wire **2** and the multiple core wires **3,** the untwisting process of untwisting the drain wire **2** and the multiple core wires **3** twisted together is performed. However, there may be cases where the untwisting cannot be done completely, leaving the drain wire **2** and the core wires **3** entangled. If one attempts to bend the core wires **3** of the multi-core cable **1** in such a state where the drain wire **2** is not being held, the drain wire **2,** which should normally be left unbent, may be bent by being pulled by the core wires **3.** In such cases, the drain wire **2** and the multiple core wires **3** cannot be separated into a desired state. With the drain wire separation device **10** according to the present embodiment, by bending the drain wire **2** and the multiple core wires **3** while holding the drain wire 2, it is possible to prevent this problem in separating the drain wire 2 and the multiple core wires 3.

Note that the bending device only needs to include at least either the movement actuator 43 for bending the drain wire 2, or the core wire clamp 71 and the bend actuator 73, and there is no need for the bending device to include both. The bending device may be configured to bend the drain wire 2 without bending the core wires 3, or may be configured to bend the core wires 3 without bending the drain wire 2. With the configuration of bending the drain wire 2, by holding and bending the drain wire 2 to move the drain wire 2 away from the core wires 3, it is possible to prevent the posture of the drain wire 2 from being disturbed while processing the core wires **3.** With the configuration of bending the multiple core wires **3,** since not only the drain wire **2** but also the multiple core wires **3** are held, it is possible to stabilize also the posture of the multiple core wires **3.**

The drain wire separation device **10** according to the present embodiment further includes the movement actuator **43** that moves the drain wire holding member **41** from the standby position **P1** away from the drain wire **2** to the holding position **P2** at which the drain wire **2** is capable of being held, and the restricting member **61** that restricts the movement of the drain wire **2** in the approach direction of the drain wire holding member **41.** With such a configuration, even if the core wires 3 are pushed in the approach direction by the drain wire holding member **41** or by a member that moves together with the drain wire holding member 41, the position of the drain wire **2** remains unmoved due to the restriction by the restricting member **61.** If the drain wire **2** is not being held, and if the drain wire **2** is entangled with the core wires **3,** the drain wire **2** moves away from the drain wire holding member **41** together with the core wires **3.** If this occurs, it becomes difficult for the drain wire holding member **41** to hold the drain wire **2.** With the drain wire separation device 10 according to the present embodiment, it is possible to suppress such an escape movement of the drain wire 2, making it easier to hold the drain wire 2 by the drain wire holding member 41.

In the present embodiment, the restricting member 61 includes the wire clamps **61L, 61R** that grip the drain wire **2** and the multiple core wires 3. With such a configuration, it is possible to reliably restrict the movement of the drain wire 2 by gripping the drain wire 2 and the multiple core wires **3.** Note that the restricting member 61 is not limited to a member that grips the drain wire 2 and the multiple core wires 3, but may be, for example, a table-like member that supports the drain wire **2** and the multiple core wires **3** from below.

The drain wire separation device **10** according to the present embodiment further includes the positioning device **30** that aligns the position of the drain wire **2** with the position of the drain wire holding member **41** in the circumferential direction of the multi-core cable **1.** With such a configuration, the drain wire **2** can be held by the drain wire holding member **41** regardless of the position of the drain wire **2** after being untwisted. Note that in the present embodiment, the positioning device **30** is configured to rotate the multi-core cable 1 about the axis. However, the positioning device **30** only needs to be configured to move at least one of the multi-core cable **1** and the drain wire holding member 41, and the positioning device **30** may be configured to rotate the drain wire holding member **41** around the multi-core cable 1.

In the present embodiment, the drain wire holding member **41** includes the pair of holding claws **41L, 41R.** The drain wire separation device 10 includes the drain wire hold actuator **42** that moves the pair of holding claws **41L, 41R** closer to or away from each other. The pair of holding claws 41L, 41R each have a sharp-angled tip portion **41a** capable of being inserted between the drain wire **2** and the multiple core wires 3. With such a configuration, by forming the tip portions 41a of the pair of holding claws 41L, **41R** into sharp angles, it becomes possible to insert the tip portions **41a** between the drain wire 2 and the multiple core wires 3, and it is possible to hold the drain wire 2 with the inserted tip portions 41a.

The drain wire separation device 10 according to the present embodiment includes the guide plate **44,** and the drain wire 2 and the multiple core wires 3 can be preliminarily separated by the guide plate **44.** However, the drain wire separation device 10 does not need to include the guide plate 44, and the sharp-angled tip portions **41a** of the pair of holding claws **41L, 41R** are particularly effective in the absence of the guide plate **44.**

The drain wire separation device **10** according to the present embodiment includes the guide plate **44** provided with the guide passage **44a** having a width sufficient to allow the drain wire **2** to pass through. The movement actuator **43** moves the drain wire holding member **41** and the guide plate **44** closer to the cable clamp **21.** The guide passage **44a** extends so as to pass between the pair of holding claws **41L, 41R** in the approach direction of the pair of holding claws **41L, 41R.** The movement actuator **43** moves the drain wire **2** through the guide passage **44a** to reach between the pair of holding claws **41L, 41R.** With such a configuration, the drain wire **2** can be guided between the pair of holding claws **41L, 41R** by passing the drain wire **2** through the guide passage **44a.**

The drain wire separation device **10** according to the present embodiment further includes the drain wire discharge device **50** that pushes the drain wire **2** to discharge the drain wire **2** from the guide passage **44a.** With such a configuration, even when the drain wire 2 is caught in the guide passage **44a,** the drain wire **2** can be discharged from the drain wire bending device **40** by pushing the drain wire **2** by the drain wire discharge device **50.**

### [Other embodiments]

A preferred embodiment of the present invention has been described above. Note however that the embodiment described above is merely illustrative, and various other embodiments are possible.

For example, while the drain wire holding member **41** holds the drain wire **2** by placing the tip portions **41a** of the holding claws **41L** and **41R** against the bottom of the drain wire 2 in the embodiment described above, the method of holding the drain wire **2 is** not limited to this. The drain wire holding member 41 may hold the drain wire **2** by gripping the drain wire **2.** The shape of the drain wire holding member **41** is not limited to a claw shape. For example, the drain wire holding member **41** may be a pair of plate-shaped members that clamp the drain wire **2.**

In the embodiment described above, the drain wire holding member **41** is moved closer to the drain wire **2.** However, the moving device that changes the positional relationship between the cable clamp **21** and the drain wire holding member **41** only needs to move them relative to each other, and there is no limitation on which one of the cable clamp **21** and the drain wire holding member **41** is moved. The drain wire separation device **10** may be configured to move the cable clamp **21** toward the drain wire holding member **41,** for example. In such a case, the drain wire separation device 10 may include a moving device that moves the cable clamp **21** from one position at which the drain wire 2 and the drain wire holding member **41** are away from each other to another position at which the drain wire holding member **41** is capable of holding the drain wire **2.** The drain wire separation device **10** may further include a restricting member that is configured to be moved by the moving device together with the cable clamp **21** and to restrict the movement of the drain wire 2 in the direction opposite to the moving direction of the cable clamp 21. The restricting member may be similar to the wire clamps **61L, 61R** of the embodiment described above. Also with such a configuration, it is possible to realize similar functions/effects to those of the restricting member **61** of the embodiment described above.

The driving device that changes the positional relationship between the cable clamp **21** and the core wire clamp **71** also only needs to move them relative to each other. The first driving device that bends the drain wire **2** only needs to be configured to move the drain wire holding member **41** and the cable clamp **21** relative to each other, and the second driving device that bends the multiple core wires **3** only needs to be configured to move the core wire clamp **71** and the cable clamp **21** relative to each other. That is, the first driving device that bends the drain wire **2** only needs to be configured to move one or both of the drain wire holding member **41** and the cable clamp **21,** and the second driving device that bends the multiple core wires 3 only needs to be configured to move one or both of the core wire clamp **71** and the cable clamp 21.

The direction in which the drain wire **2** is bent and the direction in which the core wires **3** are bent are not limited to upward and downward, respectively. The direction in which the drain wire **2** is bent and the direction in which the core wires **3** are bent do not need to be apart from each other by 180°, but may be apart from each other by an angle different from 180°, in the circumferential direction of the multi-core cable 1.

The control of the embodiment described above is merely one example and may be modified in various ways depending on the configuration of the drain wire separation device **10.** For example, the drain wire separation device 10 does not always need to include the guide plate **44,** the drain wire discharge device **50,** the wire holding device **60,** etc.

Unless specifically mentioned, the embodiments do not limit the present invention.

### Reference Signs List

- 1: Multi-core cable
- 2: Drain wire
- 3: Core wires
- 5: Sheath
- 10: Drain wire separation device
- 20: Cable holding device
- 21: Cable clamp (cable holding member)
- 30: Positioning device
- 40: Drain wire bending device (bending device)
- 41: Drain wire holding member
- 41L: Holding claw (claw member)
- 41R: Holding claw (claw member)
- 41a: Tip portion
- 42: Drain wire hold actuator (actuator)
- 43: Movement actuator (first driving device, moving device)
- 44: Guide plate (guide member)
- 44a: Guide passage
- 50: Drain wire discharge device (discharge device)
- 60: Wire holding device
- 61: Restricting member
- 61L: Wire clamp (clamp)
- 61R: Wire clamp (clamp)
- 70: Core wire bending device (bending device)
- 71: Core wire clamp (core wire holding member)
- 73: Bend actuator (second driving device)

## Claims

1. A drain wire separation device for processing a multi-core cable including a drain wire, multiple core wires, and a sheath that covers the drain wire and the multiple core wires, with the drain wire and the multiple core wires being exposed from an end portion of the sheath, the drain wire separation device comprising:
a cable holding member that holds the sheath;
a drain wire holding member that holds the drain wire; and
a bending device that includes at least one of: (1) a first driving device that moves the drain wire holding member and the cable holding member relative to each other to bend the drain wire; and (2) a core wire holding member that holds the multiple core wires, and a second driving device that moves the core wire holding member and the cable holding member relative to each other to bend the multiple core wires.

2. The drain wire separation device according to claim 1, wherein the bending device includes the first driving device.

3. The drain wire separation device according to claim 1, wherein the bending device includes the core wire holding member and the second driving device.

4. The drain wire separation device according to claim 1, further comprising:
a moving device that moves the drain wire holding member from a standby position away from the drain wire to a position at which the drain wire holding member is capable of holding the drain wire; and
a restricting member that restricts movement of the drain wire in an approach direction of the drain wire holding member.

5. The drain wire separation device according to claim 1, further comprising:
a moving device that moves the cable holding member from one position at which the drain wire and the drain wire holding member are away from each other to another position at which the drain wire holding member is capable of holding the drain wire; and
a restricting member configured to be moved by the moving device together with the cable holding member and to restrict movement of the drain wire in a direction opposite to a moving direction of the cable holding member.

6. The drain wire separation device according to claim 4 or 5, wherein the restricting member includes a clamp that grips the drain wire and the multiple core wires.

7. The drain wire separation device according to claim 1, further comprising a positioning device configured to move at least one of the multi-core cable and the drain wire holding member and to align a position of the drain wire with a position of the drain wire holding member in a circumferential direction of the multi-core cable.

8. The drain wire separation device according to claim 1, wherein:
the drain wire holding member includes a pair of claw members;
the drain wire separation device further includes an actuator that moves the pair of claw members closer to or away from each other; and
the pair of claw members each have a sharp-angled tip portion capable of being inserted between the drain wire and the multiple core wires.

9. The drain wire separation device according to claim 1, wherein:
the drain wire holding member includes a pair of claw members;
the drain wire separation device further includes:
an actuator that moves the pair of claw members closer to or away from each other;
a guide member provided with a guide passage having a width sufficient to allow the drain wire to pass through; and
a moving device that moves the drain wire holding member and the guide member closer to the cable holding member, and wherein:
the guide passage extends so as to pass between the pair of claw members in an approach direction of the pair of claw members; and
the moving device moves the drain wire through the guide passage to reach between the pair of claw members.

10. The drain wire separation device according to claim 9, further comprising a discharge device that pushes the drain wire to discharge the drain wire from the guide passage.
